# EUROPEAN PATENT APPLICATION

(11) **EP 1 921 664 A1**
(43) Date of publication of application: **14.05.2008**
(21) Application number: 06123731.9
(22) Date of filing: 09.11.2006
(51) Int. Cl.: H01J 61/35, C03C 17/30

(54) **Electric lamp with light-absorbing coating, precursor suspension for such a coating and method of making such a lamp**

(71) Applicant: Koninklijke Philips Electronics N.V., 5621 BA Eindhoven (NL); Philips Intellectual Property & Standards GmbH, 20099 Hamburg (DE)
(72) Inventor: The designation of the inventor has not yet been filed
(74) Representative: Pet, Robert Jacob

(57) **Abstract**

The electric lamp has a quartz glass lamp vessel (10) in which an electric element (3,4) is accommodated. The lamp vessel locally has a light-absorbing, non-reflective coating (11,12). The coating mainly consists of iron, iron oxide, silicon, and silicon dioxide, the ratio of the weight percentages of iron compounds and silicon compounds being in the range of 0.17 <= iron compounds/ silicon compounds <= 12, and the ratio of the weight percentages of silicon and silicon dioxide being in the range of 0.5 <= silicon/ silicon dioxide <= 50.

## Description

### FIELD OF THE INVENTION

The invention relates to an electric lamp according to the preamble of claim 1. The invention further relates to a suspension to be used for said electric lamp and a method to manufacture said electric lamp.

### BACKGROUND OF THE INVENTION

An electric halogen incandescent lamp of this kind is known from DE-3827451. Besides iron oxide the known light absorbing coating further comprises titanium oxide, manganese oxide and magnetite, FeO4, as pigments, and before being burned onto the glass of the lamp vessel, comprises as an adhesive ethyl silicate. The known coating is obtained from a suspension which comprises in addition sodium metaphosphate, glycol, monobutylglycol ether, and ethanol. The suspension is of a relatively complicated composition. The known suspension has the disadvantage that it has only a relatively short shelf life of about 3 days, and when burned onto the lamp vessel and being converted into the light absorbing coating, that said light absorbing coating can be comparatively easily knocked off the lamp vessel. Furthermore, the manganese oxide often comprises lead (oxide) as a contaminant and therefore is relatively harmful to the environment.

An electric lamp is known from GB-1422491 which has a light absorbing coating of approximately one-third by weight of glass frit comprising more than 70% by weight lead oxide, and in addition silicon oxide and boron oxide, and the oxides of iron, cobalt and manganese as pigments. It was found that this coating does adhere permanently to a lamp vessel made of hard-glass, i.e. alumino-silicate glass or boro-silicate glass, for example having a coefficient of thermal expansion in the range of 3*10⁻⁶ <= coeff. of thermal exp. <= 7*10⁻⁶, but that it quickly starts flaking off glass with an SiO2 content of at least 96% by weight, such as quartz glass, which has a much lower coefficient of thermal expansion than hard glass. Another disadvantage is that this coating comprises substances which are harmful to the environment: cobalt oxide in the pigment and lead oxide in the glass frit. This coating has the further disadvantage that it transmits comparatively much light. This disadvantage becomes more important in proportion as the luminance of the light source is higher, as is the case for example, in a high-pressure discharge lamp. Such a high-pressure discharge lamp suitable for use as a vehicle headlamp is described in EP-708978, the light-absorbing coating of the lamp disclosed in EP-708978is obtained, for example, from a suspension comprising only silicon powder and iron powder, and which is described in patent DE-2837280.

### SUMMARY OF THE INVENTION

It is an object of the invention to provide an electric lamp of the kind mentioned in the opening paragraph which is provided with a light-absorbing coating which has a comparatively high light absorption and impermeability to light and yet is durable and comparatively harmless to the environment.

According to the invention, this object is achieved by a lamp of the opening paragraph being characterized by the characterizing part of claim 1. A silicon/silicon dioxide ratio less than 0.5 renders the light absorbing properties of the light absorbing coating too be too low, in automotive application this might result in disturbing stray light/glare. A silicon/silicon dioxide ratio of more than 12 renders the light absorbing coating to be too easily removable from the lamp vessel, i.e. in that in can be comparatively easily be scratched off or even rubbed off. The silicon, iron oxide and iron together are the light absorbing pigments which renders the light absorbing coating to be black. The ratio between the pigments can be varied to a comparatively large extent for the light absorbing still to appear black. All three pigments have to be present in the coating, yet. Iron, mainly present as a metal, is a main component in the coating of the lamp according to the invention. Ethyl silicate hybrid binder used as a precursor material of the coating renders it possible to burn in the coating on the lamp vessel in a heat treatment of short duration, for example a few seconds, for example 2 to 6 seconds, at a temperature, for example 700°C to 900°C. By applying a reducing atmosphere, i.e. by flames having an excess of hydrogen, it is prevented that iron is largely converted into an oxidic form, i.e. in that it has a low oxidation rate as a result of which a high optical density and a high absorption power of the light absorbing coating remain intact. This low oxidation rate, in general is at most a few mole percent. The ethyl silicate hybrid binder, once converted to silicon dioxide provides a high resistance of the light absorbing coating to flaking-off. The light absorbing coating has the additional advantage that it reflects little or substantially no light. Said reflected light may result in parasitic light in a light beam formed by an optical system, for example a reflector and a lens.

The light absorbing coating may be readily obtained from a suspension of a mixture of iron and silicon powders, for example in a mixture of ethyl silicate hybrid binder and ethanol. After the suspension has been applied and dried, the residue is fixed by heating up the coating for a few second to about 800°C. In another favorable embodiment, the light absorbing coating has a thickness of about 0.007-0.015 mm, being a satisfactory balance between light absorbing properties and the amount of material used. The thickness of the light absorbing coating can be comparatively easily controlled by controlling the viscosity of the suspension, i.e. by adding a few percent, for example 1 to 3 percent by weight, of glycerine to the suspension.

The use of conventional ethyl silicate, i.e. tetra ethyl ortho silicate (TEOS), as a binder in coating suspensions is generally known. A significant difference between ethyl silicate hybrid binders and said conventional acid-catalyzed ethyl silicatehydrolyzates as used for the lamps disclosed in EP-708978 and DE-3827451, is that the binder (SiO2) generated during setting is not only formed from ethyl silicate but also from another source of amorphous silica, for example H2SiO3 or colloidal hydrolyzed Si(OH)2. Due to their special formulation and the technology used in their manufacture, the ethyl silicate hybrid binders have very good storage stability and processing properties. The solvent in the ethyl silicate hybrid binder that is used in the suspension of the invention is a mixture of ethanol and 2-propanol. Said ethyl silicate hybrid binder is for example supplied by Wacker under the trade name Silester ® XAR. In this product the degree of hydrolysis and pH have been optimized, i.e. in that about 0.07 weight percent of H2SO4 is provided, so as to provide the necessary reactivity and adequate storage stability. A change in pH, e.g. arising from addition of fillers, pigments, various additives or solvent evaporation, promotes condensation of the ethyl silicate and the system will cure more quickly. It is also important that the added components do not introduce uncontrolled amounts of water into the system as this would adversely affect the processing time / shelf life of the formulation. The ethyl silicate hybrid binder (Silester® XAR) has a shelf life of at least 9 months when stored at 30 °C maximum in the tightly closed original container. Its appearance is milky, it has a density of 0.92 g/cm³ at 20°C. Its SiO2 content in weight percent is about 20%.

In a favorable embodiment, the ratio of the weight percentages of iron compounds and silicon compounds being in the range of 0.65 <= iron compounds/silicon compounds <= 3, and the ratio of the weight percentages of silicon and silicon dioxide being in the range of 2.5 <= silicon/silicon dioxide <= 12.5. From experiments it appeared that Fe/Si and Si/SiO2 ratios within said ranges render coatings with even better light absorption and impermeability and better adhesion, i.e. in that it is less sensitive to scratching or flaking off and in that it cannot be rubbed off.

### BRIEF DESCRIPTION OF THE DRAWINGS

Embodiments of the electric lamp according to the invention are shown in the drawing, in which
Fig. 1 shows a discharge lamp in side elevation, partly in cross-section; and
Fig. 2 shows an incandescent lamp in side elevation.

### DETAILED DESCRIPTION OF EMBODIMENTS

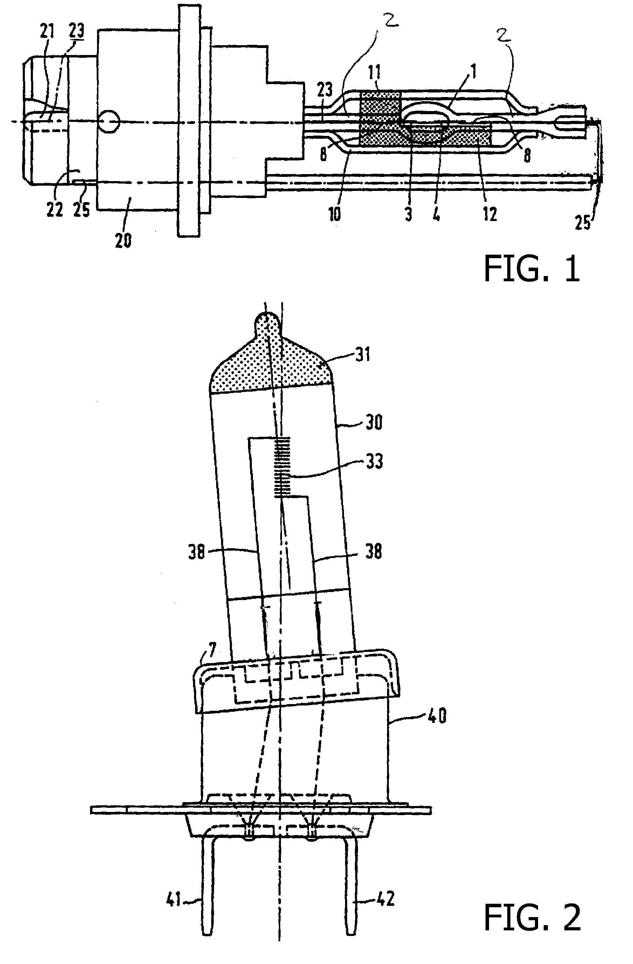

In Fig. 1, the high-pressure discharge lamp has a quartz glass lamp vessel 10 being gastightly sealed by seals 2, in which lamp vessel an electric element is arranged. The electric element comprises electrodes 3, 4 in an inner quartz glass envelope 1 containing an ionizable filling. The filling comprises, for example, mercury, a mixture of metal halide such as sodium iodide and scandium iodide, and a rare gas such as, for example, xenon, for example with a filling pressure of several bar. Current conductors 8, 23; 8, 25 comprising Mo-foils embedded in the seals 2 of the lamp vessel, are connected to the electrodes and issue from the lamp vessel to the exterior. The lamp has a lamp cap 20 fitted with contacts 21,22.

The lamp vessel is locally covered with a light-absorbing coating 11, 12 which comprises iron (mainly in metallic and partially in oxidic form), silicon dioxide, and silicon powder. The coating substantially contains 62% by weight of iron, 30% by weight of silicon and 8% by weight of silicon dioxide. In the embodiment drawn, the glass of the coating is UV-absorbing quartz glass.
The coating was obtained from a suspension of 1500 gram metallic iron powder obtained by conversion of Fe(CO)5, i.e. carbonyleisenpulver from BASF, 750 gram silicon powder, 400 gram ethanol and 700 gram ethyl silicate hybrid binder, i.e. Wacker Silester® XAR with 20 percent by weight of SiO2 having a mixture of alcohols as a solvent, i.e. said mixture of alcohols comprises ethanol and 2-propanol. Alternatively usable ethyl silicate binders in the suspension are for example Wacker Silester® AR and Wacker Silikat H450N. The coating has a thickness of about 0.009 mm and substantially does not transmit light, substantially does not reflect light, and remains adhered to the lamp vessel during its entire life.

In Fig. 2, the electric lamp has a lamp vessel 30 made of hard glass with an incandescent body 33 therein, in an inert gas comprising a halogen in the Figure. The hard glass is a boro-silicate glass in the Figure, but the hard glass could alternatively be an alumino-silicate glass The incandescent body is connected to current conductors 38 which issue from the lamp vessel to the exterior and are connected to respective contacts 41, 42 of a lamp cap 40 fastened to the lamp vessel via a position element 7. The lamp vessel locally has a light-absorbing coating which comprises iron mainly in metallic and partially in oxidic form, silicon dioxide, and silicon powder. The coating substantially contains 63% by weight of iron, 31 % by weight of silicon and 6% by weight of silicon dioxide. The coating has a thickness of about 0.011 mm. The coating was obtained from a suspension of 1500 gram metallic iron powder, 750 gram silicon powder, 400 gram ethanol and 800 gram ethyl silicate hybrid binder having 20 percent by weight of SiO2, and 50 gram of glycerine. The coating was applied via a dipping process, but could alternatively be applied via a spraying process. Subsequently the coating was burned onto the lamp vessel via a heating process of flames with reducing atmosphere during 4 seconds. The coating was heated up to approximately 850°C thereby.

## Claims

1. An electric lamp comprising a lamp vessel in which an electric element is arranged to which electric element current conductors are connected which issue from the lamp vessel to the exterior, which lamp vessel is locally coated with a light-absorbing coating which comprises silicon dioxide and iron compounds which comprises iron which at least is for a part in oxidic form,
**characterized in that** the coating further comprises silicon which together with silicon dioxide form the silicon compounds, the ratio of the weight percentages of the iron compounds and silicon compounds being in the range of 0.17 <= iron compounds/silicon compounds <= 12, and the ratio of the weight percentages of silicon and silicon dioxide being in the range of 0.5 <= silicon/silicon dioxide <= 50.

2. An electric lamp as claimed in Claim 1, **characterized in that** the ratio of the weight percentages of iron compounds and silicon compounds being in the range of 0.65 <= iron compounds/silicon <= 3, and the ratio of the weight percentages of silicon and silicon dioxide being in the range of 2.5 <= silicon/silicon dioxide <= 12.5.

3. An electric lamp as claimed in claim 1 or 2, **characterized in that** the coating has a thickness in the range of 0.007 to 0.015 mm.

4. A suspension for use on an electric lamp according to claim 1, the suspension comprising up to a total of 100 percent by weight of the following materials in the ranges:
10-70% by weight of iron
5-50% by weight of silicon
5-30% by weight of at least one alcohol
5-50% by weight of ethyl silicate hybrid binder.

5. A suspension as claimed in claim 4, **characterized in that** said suspension comprising up to a total of 100 percent by weight of the following materials in the ranges:
35-45% by weight of iron
15-25% by weight of silicon
15-25% by weight of at least one alcohol
10-30% by weight of ethyl silicate hybrid binder.

6. A suspension as claimed in claim 4 or 5, **characterized in that** said at least one alcohol comprises ethanol and/or 2-propanol.

7. A suspension as claimed in claim 4, 5 or 6, **characterized in that** 1 to 3% by weight of the at least one alcohol is substituted by 1 to 3% by weight of glycerine.

8. A method for making an electric lamp according to claim 1, the method comprising the steps of:
- applying a wet coating onto the lamp vessel with use of the suspension according to claim 4;
- drying of the wet coating to become a dry coating;
- burning of the dry coating onto the lamp vessel to become the light absorbing coating.

9. A method for making an electric lamp as claimed in claim 8, **characterized in that** the burning of the dry coating comprises heating up the dry coating during 2 to 8 seconds to a temperature in the range of 600°C to 1000°C.

10. A method as claimed in claim 8 or 9, **characterized in that** the heating is done by flames providing a reducing atmosphere.

11. An electric lamp obtainable by the method of any of the claims 8 to 10.
